# FASCICULE DE BREVET EUROPEEN

(11) **EP 3 391 441 B1**
(45) Date de publication et mention de la délivrance du brevet: **19.08.2020**
(21) Numéro de dépôt: 16805863.4
(22) Date de dépôt: 06.12.2016
(51) Int. Cl.: H01M 4/58, H01M 4/04, H01M 4/62, H01M 4/66

(54) **ELECTRODE EN HALOGÉNURE DE MÉTAL À CONDUCTIVITÉ AMÉLIORÉE ET PROCÉDÉ DE FABRICATION ASSOCIÉ**
METALLHALIDELEKTRODE MIT VERBESSERTER LEITFÄHIGKEIT UND ZUGEHÖRIGES HERSTELLUNGSVERFAHREN
METAL HALIDE ELECTRODE WITH IMPROVED CONDUCTIVITY, AND ASSOCIATED PRODUCTION METHOD

(30) Priorité: 17.12.2015 FR 1562714
(43) Date de publication de la demande: 24.10.2018
(73) Titulaire: Electricité de France, 75008 Paris (FR)
(72) Inventeur: VIDAL, Elodie, 77690 Montigny sur Loing (FR); RIBEAUCOURT, Lydie, 77210 Avon (FR); NOVOA, Ramon X., 36211 Vigo (ES); GUITIAN, Beatriz, 36440 As Neves (ES)
(74) Mandataire: Plasseraud IP
(86) Numéro de dépôt international: PCT/EP2016/079845
(87) Numéro de publication internationale: WO 2017/102424

(56) Documents cités:
- US-A1- 2004 121 235
- US-A1- 2015 243 990
- GUITIÁN B ET AL: "On the growth of nanostructured iron hydroxy-fluorides for Li-ion batteries", JOURNAL OF POWER SOURCES, vol. 241, 15 mai 2013 (2013-05-15), pages 567-571, XP028675821, ISSN: 0378-7753, DOI: 10.1016/J.JPOWSOUR.2013.04.145

## Description

### DOMAINE TECHNIQUE

L'invention se rapporte au domaine des dispositifs électrochimiques à ion de métal alcalin, tels que les accumulateurs ou les batteries lithium-ion. Plus particulièrement, l'invention se rapporte aux électrodes positives de ces dispositifs à ion de métal alcalin, et leur procédé de fabrication.

### ARRIÈRE-PLAN TECHNOLOGIQUE

La technologie des batteries à ion de métal alcalin, parmi lesquelles figurent notamment les batteries lithium-ion ou sodium-ion, suscite aujourd'hui un grand intérêt de par ses performances élevées et supérieures à celles de la plupart des autres technologies de batteries actuelles. Toutefois, malgré son potentiel pour le stockage d'énergie, l'utilisation des dispositifs électrochimiques à ion de métal alcalin commercialisés à ce jour reste limitée du fait notamment de leur densité d'énergie restituée insuffisante et de leur coût jugé trop élevé.

La densité d'énergie des batteries à ion de métal alcalin est plus particulièrement limitée par les performances de son électrode positive. Parmi les batteries à ion de métal alcalin les plus répandues figurent les batteries de type lithium-ion.

Les technologies lithium-ion existantes reposent sur l'utilisation d'une électrode positive comprenant un matériau réagissant électrochimiquement de façon réversible avec le lithium. Le matériau réagissant électrochimiquement de façon réversible avec le lithium est généralement un matériau d'insertion c'est-à-dire une structure hôte dans laquelle des ions lithium sont insérés en cours de réaction. Typiquement, l'électrode positive d'une batterie lithium-ion est fabriquée à base d'oxydes de métaux de transition, comme par exemple l'oxyde de cobalt lithié LiCoO₂, très largement utilisé notamment dans les dispositifs portatifs, ou encore l'oxyde de manganèse lithié LiMn₂O₄.

Un autre type de matériau réagissant électrochimiquement avec le lithium est aussi étudié : les matériaux à conversion. Dans ces électrodes à matériaux à conversion, les ions lithium réagissent selon la réaction suivante :

nLi⁺ + Meⁿ⁺X + ne⁻ <=> LiₙX + Me⁰

où Me représente un métal de transition et X est un élément qui peut être du fluor, du soufre, de l'oxygène, du phosphore ou de l'azote par exemple. L'avantage de ces réactions par rapport aux réactions d'insertion est que le nombre de moles d'électrons (n) mises en jeu par mole de métal de transition (Me) est en général égal ou supérieur à 2, ce qui est très élevé par rapport au cas des matériaux d'insertion : -0,5 pour LiCoO₂. Cette caractéristique confère un potentiel énergétique important aux réactions de conversion.

Parmi les matériaux à conversion les plus prometteurs figurent les halogénures de métal, et plus particulièrement les fluorures de métal. Les fluorures de métal présentent en effet une capacité théorique élevée qui permettrait en principe d'améliorer considérablement la densité d'énergie d'une batterie lithium-ion. À titre d'exemple, le fluorure de fer FeF₃ présente une capacité théorique de 237 Ah•kg⁻¹ à un potentiel de 2,7 V (cas d'une réaction par transfert d'une mole d'électrons, ou réaction d'insertion des ions lithium), ou encore 712 Ah•kg⁻¹ à un potentiel de 1,5 V (cas d'une réaction par transfert de trois moles d'électrons, ou conversion en Fe°). Le fluorure de fer FeF₃ permettrait ainsi d'atteindre en principe une densité d'énergie théorique de 640 Wh•kg⁻¹ ou 1068 Wh•kg⁻¹ respectivement. Ces valeurs sont plus élevées que celles qui peuvent être atteintes avec des électrodes classiques; par exemple, le matériau LiCoO₂ couramment utilisé présente une capacité théorique de 150Ah•kg⁻¹ à un potentiel de 4V, soit 600Wh•kg⁻¹. La densité d'énergie théorique accessible au moyen d'une électrode positive comprenant un fluorure de métal peut ainsi être d'environ 80% plus élevée qu'avec d'autres types d'électrodes connues couramment employées dans les batteries lithium-ion.

Lors de la première décharge d'une batterie lithium-ion incluant une électrode comprenant du fluorure de fer, le FeF₃ se réduit électrochimiquement avec les ions lithium pour former un nano composite qui est constitué de nano domaines de Fe incrustés dans une matrice de LiF. Lors des phases suivantes de charge et décharge de la batterie, la composition du nano composite évoluera de façon réversible, avec formation du fluorure de fer en charge et formation de fer métallique en décharge, selon l'équation suivante:

FeF₃ + 3Li⁺ + 3e⁻ <=> 3LiF + Fe⁰

Le changement de structure et de phase engendré par cette réaction occasionne d'importantes variations de volume et crée des contraintes mécaniques qui peuvent à terme entrainer une décohésion de la matière active. Pour remédier à ces défauts, des électrodes composites comprenant des nano-poudres sont utilisées. Ces électrodes composites sont typiquement constituées d'une poudre de matière active (c'est-à-dire, une poudre de fluorure de métal) mélangée à un polymère liant et à une poudre de matériau conducteur électrique. Le problème de la décohésion peut en outre être partiellement résolu en diminuant le diamètre des particules de poudre de fluorure de métal.

Toutefois, l'augmentation des performances des batteries lithium-ion à base de fluorures de métal se heurte encore à un autre obstacle qui reste à ce jour non résolu. En effet, les fluorures de métal sont des matériaux à faible conductivité électronique. Ceci réduit considérablement leur capacité massique pratique accessible. Typiquement, les meilleures électrodes composites à base de fluorures de métal permettent d'atteindre en pratique des capacités massiques de 80 Ah•kg⁻¹ pour la réaction d'insertion des ions lithium (contre 237 Ah•kg⁻¹ théoriquement atteignables) ou 600 Ah•kg⁻¹ à 70°C pour la réaction de conversion en Fe⁰ en phase de décharge (contre 712 Ah•kg⁻¹ théoriquement atteignables). L'approche classique pour surmonter le problème de la faible conductivité des fluorures de métal consiste à : fabriquer le matériau actif (fluorure de métal) sous forme de particules nanométriques ; de mélanger ces particules avec un matériau conducteur, typiquement du carbone ; et d'enrober l'ensemble avec une matrice constituée par un polymère liant.

Les performances de l'électrode positive obtenue, utilisée dans une batterie, dépendent alors en grande partie de paramètres tels que par exemple la granulométrie des matériaux, la nature du liant utilisé, la qualité et le mode de mélangeage utilisé et la pression de calandrage lors de la fabrication de l'électrode. Cette approche est donc complexe et ne permet par ailleurs pas d'atteindre les performances espérées en termes de capacité massique.

Il est par conséquent recherché un procédé simple de fabrication d'une électrode positive pour un dispositif électrochimique lithium-ion et une électrode positive qui permettent d'obtenir une électrode possédant une meilleure conductivité électronique, surmontant ainsi le problème de faible conductivité électronique des fluorures de métaux. Il est également recherché un procédé et une électrode permettant d'atteindre des capacités spécifiques plus élevées que celles des électrodes positives de batteries lithium-ion de l'art antérieur.

### EXPOSE DE L'INVENTION

Pour répondre aux problèmes exposés ci-avant, la présente invention propose un procédé de fabrication d'une électrode positive destinée à être utilisée dans un dispositif électrochimique à ion de métal alcalin. Ce procédé comprend la synthèse d'une couche d'un halogénure de métal par traitement électrochimique d'un collecteur de courant, la couche comprenant une structure poreuse. En outre, le procédé comprend l'incorporation, dans au moins une partie de la structure poreuse, d'un composé électriquement conducteur.

L'invention propose ainsi une approche à l'opposé des techniques de fabrication de l'art antérieur. Les électrodes positives de batteries lithium-ion de l'art antérieur reposent sur l'incorporation de nanoparticules d'un fluorure de métal et d'un matériau conducteur électronique dans une matrice de polymère liant, l'ensemble formant une pâte qui est appliquée sur un collecteur de courant métallique. L'invention utilise une approche différente dans laquelle l'électrode positive est dépourvue de polymère liant. L'halogénure de métal de l'électrode positive de l'invention, pouvant typiquement être du fluorure de métal, est obtenu via un traitement électrochimique d'un collecteur de courant métallique, qui forme la partie centrale de l'électrode positive (ou bien l'une des parties extrémales, selon la géométrie de l'électrode). Le traitement électrochimique conduit typiquement à la synthèse d'une couche d'halogénure de métal comprenant le même métal qu'un métal du collecteur de courant. Pour résoudre le problème de faible conductivité électronique, l'invention incorpore un additif sous forme de composé électriquement conducteur directement dans la structure du fluorure de métal.

La structure poreuse de la couche d'halogénure de métal est particulièrement adaptée à l'incorporation du composé électriquement conducteur. Le procédé objet de la présente invention repose en outre sur des techniques simples, mises en œuvre très rapidement. Le procédé permet d'obtenir à moindre coût une électrode positive présentant une meilleure conductivité électrique que les électrodes positives en matériau composite de l'art antérieur.

Il convient de comprendre le terme « incorporer » comme couvrant tout procédé permettant d'aboutir à une couche d'halogénure de métal présentant, dans sa structure poreuse, un composé électriquement conducteur. Ce composé électriquement conducteur peut par exemple être introduit par introduction sous forme de particules, ou de matière apte à se polymériser, ou bien encore se former au moyen d'une réaction chimique permettant au composé formé d'être lié à la structure poreuse.

Selon un mode de réalisation, la structure poreuse de la couche d'un halogénure de métal comprend des pores, le procédé pouvant en outre comprendre :
- incorporer le composé électriquement conducteur au moins partiellement dans des pores de la structure poreuse de la couche d'un halogénure de métal.

Une incorporation du composé électriquement conducteur dans des pores de la structure poreuse de la couche d'halogénure de métal est adaptée à certains composés pouvant par exemple se présenter sous forme de poudres ou granules.

Selon un mode de réalisation, la structure poreuse de la couche d'un halogénure de métal comprend des parois, le procédé pouvant en outre comprendre :
- incorporer le composé électriquement conducteur au moins partiellement dans des parois de la structure poreuse de la couche d'un halogénure de métal.

Une incorporation du composé électriquement conducteur dans des parois de la structure poreuse de la couche d'halogénure de métal est adaptée à certains composés pouvant par exemple être incorporés dans la structure poreuse par une technique de substitution impliquant un traitement thermique en phase humide.

Selon un mode de réalisation, le traitement électrochimique comprend une anodisation du collecteur de courant à partir d'une solution d'éthylèneglycol, du fluorure d'ammonium et de l'eau.

Ce procédé d'anodisation peut être mis en œuvre de manière simple, et n'utilise que des composés compatibles avec la plupart des procédés de fabrication industriels.

Selon un mode de réalisation, le procédé peut en outre comprendre :
- incorporer le composé électriquement conducteur lors du traitement électrochimique du collecteur de courant.

Une technique d'incorporation au même moment que la synthèse de la couche poreuse en halogénure de métal (procédé dit « in situ ») présente l'avantage de fabriquer l'électrode en une seule étape. Une incorporation in situ du composé électriquement conducteur permet en outre un dépôt homogène du composé dans l'halogénure de métal. Par ailleurs, une incorporation in situ conserve une structure poreuse une fois l'électrode fabriquée, ce qui pourrait faciliter la migration des espèces ioniques lors des phases de charge et de décharge d'un dispositif électrochimique équipé d'une telle électrode.

Selon un mode de réalisation, le procédé peut en outre comprendre :
- incorporer le composé électriquement conducteur après avoir synthétisé la couche d'halogénure de métal.

Le composé électriquement conducteur peut également être incorporé dans la couche d'halogénure de métal après que cette dernière ait été synthétisée. Cette approche alternative permet d'adapter le procédé à différents types de composés électriquement conducteurs, certains composés pouvant ne pas être compatibles avec une étape de traitement électrochimique. Par ailleurs, en incorporant le composé après avoir synthétisé la couche d'halogénure de métal, il est possible d'obtenir une structure dans laquelle le composé ne remplit que partiellement et/ou sélectivement les porosités de la couche d'halogénure de métal.

L'invention se rapporte également à une électrode positive destinée à être utilisée dans un dispositif électrochimique à ion de métal alcalin, l'électrode positive comprenant :
- un collecteur de courant comprenant un métal ;
- une couche en halogénure de métal comprenant une structure poreuse, la couche étant solidaire du collecteur de courant, l'halogénure de métal de la couche comprenant le même métal que le collecteur de courant.
En outre, l'électrode positive comprend :
- un composé électriquement conducteur inclus dans au moins une partie de la structure poreuse de la couche en halogénure de métal.

L'électrode objet de la présente invention est une électrode qui peut être obtenue par le procédé décrit ci-avant. Notamment, la synthèse de la couche en halogénure de métal (l'halogénure pouvant typiquement être du fluorure) bénéficie de la présence du métal du collecteur de courant pour faire croître une structure poreuse solidaire du collecteur de courant, dans laquelle le fluorure est directement intégré. Le composé électriquement conducteur peut être intégré au moment de cette synthèse, ou bien ultérieurement, comme discuté ci-avant.

Selon un mode de réalisation, le composé électriquement conducteur peut être en contact direct avec la structure poreuse de la couche en halogénure de métal.

Un contact direct entre le composé électriquement conducteur et la structure poreuse suppose l'absence d'intermédiaires tels que des liants entre le composé électriquement conducteur et la structure poreuse.

Selon un mode de réalisation, le composé électriquement conducteur peut comprendre de la magnétite.

La magnétite peut être intégrée dans la couche d'halogénure de métal par immersion de l'électrode dans une solution chargée en magnétite. La magnétite confère des propriétés électriques satisfaisantes à l'électrode positive ainsi obtenue. La magnétite présente en outre l'avantage supplémentaire d'être un matériau actif, au même titre que l'halogénure de métal. Ceci implique que la magnétite participe, en coopération avec l'halogénure de métal, à la charge et à la décharge du dispositif électrochimique équipé de l'électrode positive. Cette propriété est obtenue par la formation d'un réseau mixte d'anions F⁻ et O²⁻. De la sorte, la magnétite contribue à augmenter davantage encore la capacité massique restituée par l'électrode positive.

Selon un mode de réalisation, le composé électriquement conducteur peut comprendre de l'oxyfluorure de fer.

L'incorporation d'oxyfluorure de fer peut typiquement se faire par traitement thermique sous atmosphère humide contrôlée, ce qui modifie la structure de la couche d'halogénure de métal par une diminution de la taille des porosités suite à l'incorporation d'hétéroatomes.

Selon un mode de réalisation, le composé électriquement conducteur peut comprendre de la poly-aniline.

La poly-aniline est un polymère conducteur qui peut simplement être intégré dans la couche poreuse d'halogénure de métal par polymérisation, lors de la synthèse de cette dernière ou postérieurement. La mise en œuvre de cette polymérisation lors de la synthèse de la couche d'halogénure de métal est particulièrement simple car elle implique une simple substitution locale de la source d'halogénure (par exemple NH₄F dans le cas du fluorure) de l'électrolyte par une quantité équivalente en halogénure d'aniline (typiquement du fluorure d'aniline).

Selon un mode de réalisation, la structure poreuse peut comprendre des pores de diamètre compris entre 5 nm et 1 µm.

Ces dimensions sont particulièrement adaptées à une conduction ionique des ions alcalins, permettant de l'utiliser dans un dispositif électrochimique à ion de métal alcalin. Cette taille de pores, combinée avec la structure poreuse d'aspect général spongieux de la couche d'halogénure de métal, avec des parois fines (présentant une épaisseur typiquement comprise entre 20 et 50 nm) confère une bonne tenue mécanique à l'ensemble lors des variations de volumes subies par l'électrode positive en charge et en décharge.

Selon un mode de réalisation, le composé électriquement conducteur peut se présenter sous forme de particules dans la structure poreuse.

L'utilisation de particules permet de simplifier le procédé d'incorporation du composé électriquement conducteur dans la couche d'halogénure de métal. La taille des particules peut typiquement être du même ordre de grandeur que la taille des porosités de la couche d'halogénure de métal.

Selon un mode de réalisation, le collecteur de courant peut comprendre un alliage à base de métal.

L'utilisation d'un alliage permet de modifier les propriétés mécaniques de l'électrode positive, par exemple en renforçant l'électrode au niveau du collecteur de courant. Le choix de l'alliage peut également contribuer à modifier les propriétés de conduction électrique de l'électrode positive.

Selon un mode de réalisation, le métal du collecteur de courant peut être choisi parmi le fer, le cuivre, le nickel, le cobalt, le manganèse, le zinc ou le chrome.

Selon un mode de réalisation, une électrode positive telle que décrite ci-avant peut faire partie intégrante d'un système électrochimique à ion de métal alcalin.

Notamment, le système électrochimique à ion de métal alcalin peut être un système de type lithium-ion ou sodium-ion.

Selon un mode de réalisation, un système électrochimique à ion de métal alcalin comprenant une électrode positive telle que décrite ci-avant peut être agencé sous forme de batterie.

Selon un mode de réalisation, un système électrochimique à ion de métal alcalin comprenant une électrode positive telle que décrite ci-avant peut être agencé sous forme d'accumulateur électrochimique.

### DESCRIPTIF DES FIGURES

Le procédé objet de l'invention sera mieux compris à la lecture de la description qui suit d'exemples de réalisations présentés à titre illustratif, aucunement limitatifs, et à l'observation des dessins ci-après sur lesquels :
- la figure 1 est une représentation schématique d'un dispositif expérimental de traitement anodique d'un collecteur de courant en vue de synthétiser une couche de fluorure de métal utilisée dans le procédé de la présente invention;
- la figure 2 est une représentation schématique d'une couche de fluorure de métal obtenue par le procédé de la présente invention, avant incorporation du composé électriquement conducteur;
- la figure 3 est une représentation schématique d'une couche de fluorure de métal selon un mode de réalisation de l'invention ;
- les figures 4a et 4b sont des photographies prises au microscope électronique à balayage (MEB) d'une couche de fluorure de fer selon un mode de réalisation de l'invention ;
- la figure 5 représente une photographie prise au microscope électronique à balayage (MEB) d'une couche de fluorure de fer selon un mode de réalisation de l'invention ;
- la figure 6 est un diagramme de Nyquist illustrant l'impédance électrochimique d'une couche de fluorure de fer dépourvue de poly-aniline comparée avec l'impédance d'une couche de fluorure de fer incorporant de la poly-aniline, à différentes fréquences ;
- la figure 7 est un graphique illustrant la variation en fonction du temps et lors d'un cycle de décharge et charge du potentiel d'une électrode positive comprenant de la poly-aniline comparée à celle d'une électrode dépourvue de poly-aniline ;
- la figure 8 est un diagramme de Nyquist illustrant la limite haute fréquence de l'impédance d'une couche de fluorure de fer dépourvue de magnétite et comparée avec celle d'une couche de fluorure de fer incorporant de la magnétite, sans séchage intermédiaire de la couche après synthèse et avec séchage intermédiaire de la couche après synthèse ;
- la figure 9 est un graphique illustrant la variation en fonction du temps et lors d'un cycle de décharge et charge du potentiel d'une électrode positive comprenant de la magnétite comparée à celle d'une électrode dépourvue de magnétite (réalisé à la même densité de courant);
- la figure 10 représente des photographies prises au microscope électronique à balayage (MEB) d'une couche de fluorure de fer selon un second mode de réalisation de l'invention ;
- les figures 11a et 11b représentent sur deux graphiques respectivement la variation du potentiel en fonction du temps et lors d'un cycle de décharge et charge d'une électrode positive dépourvue d'oxyfluorure de fer et celle d'une électrode comprenant de l'oxyfluorure de fer (réalisé à la même densité de courant).

Pour des raisons de clarté, les dimensions des différents éléments représentés sur ces figures ne sont pas nécessairement en proportion avec leurs dimensions réelles. Sur les figures, des références identiques correspondent à des éléments identiques.

### DESCRIPTION DÉTAILLÉE

La présente invention propose un procédé de fabrication d'une électrode positive à base d'halogénure de métal destinée à être utilisée dans un dispositif électrochimique à ion de métal alcalin, tel qu'une batterie, ou un accumulateur électrochimique. L'invention résout le problème de la faible conductivité électrique de ces composés en incorporant, pendant ou après la synthèse d'une couche d'halogénure de métal, un composé électriquement conducteur qui s'intègre dans la structure poreuse de cette dernière, soit en remplissant, au moins partiellement, les porosités de la couche d'halogénure de métal synthétisée, soit en s'intégrant dans des parois de la structure poreuse de la couche d'halogénure de métal synthétisée, par exemple via une réaction chimique. Cette incorporation peut notamment être effectuée par un électro-dépôt d'un composé électriquement conducteur in situ lors de la fabrication de la structure poreuse ou bien postérieurement à la synthèse de la couche d'halogénure de métal. Le composé électriquement conducteur est en contact direct avec l'halogénure de métal de la structure poreuse. À titre d'exemple, la présente description se rapporte à une électrode en fluorure de métal. Toutefois, d'autres halogénures peuvent également être envisagés. De même, le dispositif électrochimique à ion de métal alcalin décrit ci-après est une batterie lithium-ion, mais d'autres dispositifs peuvent être envisagés, par exemple des dispositifs utilisant la technologie sodium-ion.

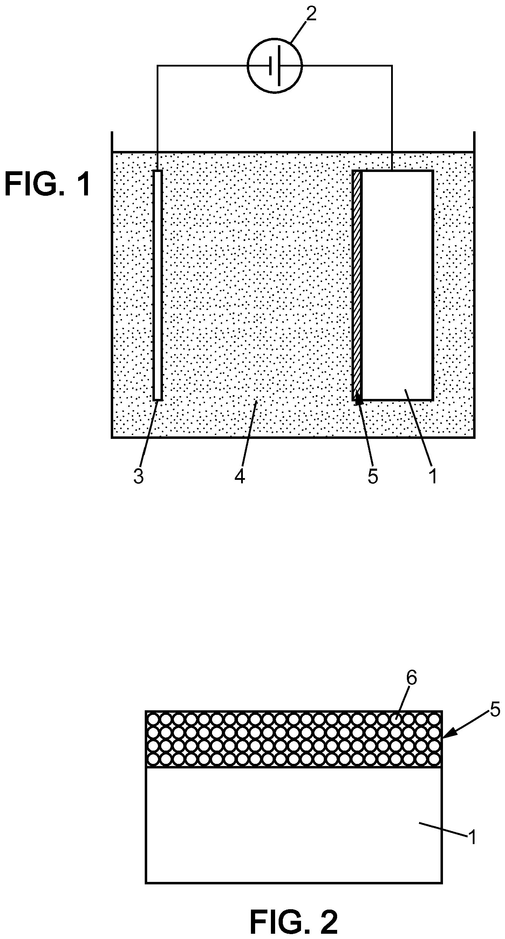

La figure 1 représente de manière schématique un collecteur de courant 1 introduit dans une solution liquide 4 adaptée pour l'anodisation du collecteur de courant. Cette solution liquide peut notamment comprendre une solution d'éthylèneglycol, du fluorure d'ammonium et de l'eau. Un exemple de procédé d'anodisation du collecteur de courant pour y faire croître une couche poreuse d'un fluorure de métal est décrit dans l'article « On the growth of nanostructured iron hydroxy-fluorides for Li-ion batteries » de Guitiân B. et al. JOURNAL OF POWER SOURCES, vol. 241, (2013-05-12) pages 567-571. Il comprend notamment le passage d'un courant entre une anode (collecteur de courant 1) et une contre-électrode 3 servant de cathode. La contre-électrode peut par exemple être une électrode de platine. La source de tension 2 applique entre les deux électrodes une tension typiquement comprise entre 25 V et 150 V pendant un quart d'heure environ. Avantageusement, cette tension est comprise entre 40 V et 50V, pour un résultat optimal. Sur l'anode se produit le dépôt d'une couche de fluorure de métal, qui dans le cas du fer, donné à titre d'exemple, s'écrit sous la forme :

Fe + xF⁻ → FeFₓ^{(3-x)+} + 3e⁻

De l'eau est également oxydée via la réaction :

H₂O → 1/2O₂ + 2H⁺ + 2e⁻

Sur la cathode (contre-électrode), l'ammonium est réduit via la réaction

NH₄⁺ + e⁻ → NH₃ + ½ H₂

De l'eau est également réduite via la réaction

2H₂O + 2e⁻ → 2OH⁻ + H₂

Comme illustré sur la figure 1, cette anodisation conduit au dépôt d'une couche 5 d'un fluorure de métal sur le collecteur de courant 1.

La figure 2 représente schématiquement une couche 5 d'un halogénure de métal obtenue à l'issue du processus d'anodisation, l'halogénure étant dans l'exemple de la figure 2 du fluorure. La couche 5 d'un fluorure de métal a une structure poreuse comprenant des pores 6. Typiquement, ces pores ont une dimension comprise entre 5 nm et 1 µm, et avantageusement une dimension de l'ordre de 50 nm. Ces porosités peuvent définir des structures ressemblant à des tubulures dans la couche 5d'un fluorure de métal. Les pores 6 sont séparés par des parois qui sont organisées de sorte à conférer un aspect général spongieux à la couche 5. La représentation de la figure 2 est une représentation en deux dimensions qui ne rend pas fidèlement compte de l'aspect général de la couche 5. La structure poreuse comprend notamment des porosités ouvertes.

L'incorporation d'un composé électriquement conducteur dans la structure poreuse de la couche 5 peut s'effectuer soit par remplissage au moins partiel des pores 6, soit par intégration dans les parois de la structure poreuse, soit par une combinaison des deux processus.

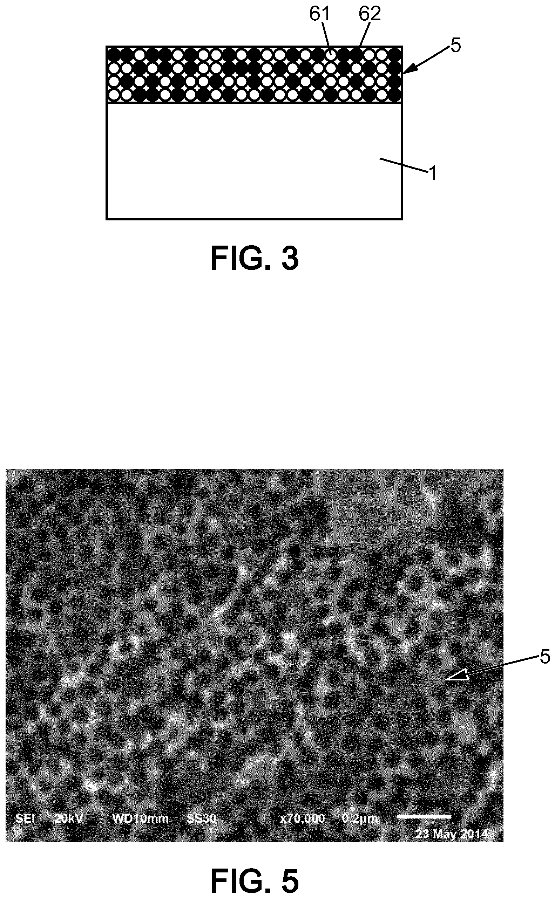

Comme illustré sur la figure 3, les pores 6 de la couche 5 d'un fluorure de métal sont remplis partiellement par un composé électriquement conducteur. Ainsi, selon les techniques d'incorporation de ce composé, les pores 6 peuvent être partiellement remplis comme indiqué par les pores bouchés 62 et les pores 61 dépourvus de composé, ou bien totalement remplis. Il se peut également, dans le cas particulier d'une incorporation du composé électriquement conducteur dans la couche 5 d'un fluorure de métal directement lors de l'anodisation, qu'aucun pore ne soit obstrué et que le composé électriquement conducteur fasse intégralement partie de la structure poreuse de la couche 5. Dans ce cas, l'incorporation du composé électriquement conducteur dans les parois de la structure poreuse de la couche 5 peut conduire à un épaississement des parois et une réduction du diamètre des pores, qui peuvent dans certains cas apparaître partiellement ou totalement obstrués. La représentation de la figure 3 est une représentation en deux dimensions fournie à titre purement illustratif et schématique. La répartition des pores bouchés 62 et des pores 61 dépourvus de composé ne rend pas compte de l'aspect général qui serait observé en trois dimensions.

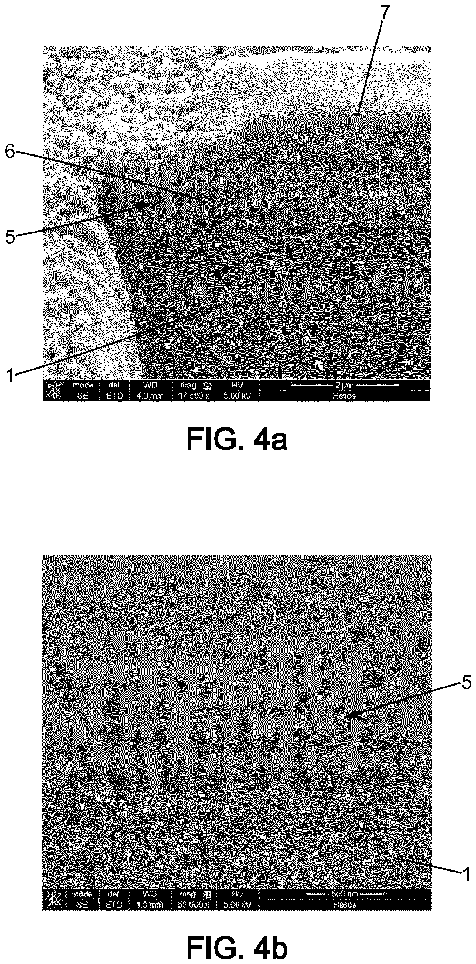

La figure 4a est une photographie prise au microscope électronique à balayage (MEB) d'une couche 5 d'un fluorure de métal (vue en coupe) comprenant au moins partiellement dans son volume un composé électriquement conducteur. Le collecteur de courant 1 est solidaire de cette couche 5. La figure 4a comporte un dépôt métallique 7 au-dessus de la couche 5 d'un fluorure de métal, rajoutée uniquement afin d'effectuer la découpe sous faisceau d'ions (FIB - Focused Ion Beam) dans l'enceinte du MEB.

La figure 4b est une photographie MEB avec une résolution plus élevée montrant la zone de jonction entre le collecteur de courant 1 et la couche 5 d'un fluorure de métal de la figure 4a. Il convient de remarquer l'aspect général spongieux de la couche 5 de fluorure de métal obtenue par traitement électrochimique du collecteur de courant 1, cette couche 5 étant solidaire du collecteur de courant 1. Cette structure spongieuse comprenant des pores 6 contribue à la tenue mécanique de l'électrode positive après plusieurs cycles de charge et décharge. En particulier, l'incorporation de lithium dans cette couche 5 en phase de décharge ne modifie pas considérablement la taille globale de la couche, le lithium pouvant s'introduire aisément dans la structure poreuse de la couche 5. Par ailleurs, une telle structure poreuse permet de maintenir une bonne tenue mécanique lors des cycles de charge et décharge et évitant des variations d'épaisseur importantes de la couche 5 lors des variations de volume de cette dernière, les variations de volume se traduisant préférentiellement par un épaississement des parois de la structure poreuse ou bien un remplissage au moins partiel des pores de la structure poreuse.

La structure poreuse comprend en outre des pores formant des canaux sensiblement tubulaires entre l'électrode positive et l'électrode négative.

L'électrode positive destinée à un dispositif électrochimique lithium-ion, issue du procédé décrit ci-avant, peut typiquement comprendre trois types de composés électriquement conducteurs : de la magnétite, des oxyfluorures de fer, ou un composé polymère électriquement conducteur tel que la poly-aniline.

Ces composés peuvent être incorporés lors de la synthèse de la couche 5 (procédé dit « in situ »). La poly-aniline peut être rajoutée sous forme non polymérisée en solution lors de l'étape de synthèse de la couche 5, et être polymérisée par oxydation électrochimique afin de s'intégrer dans la structure poreuse de la couche 5. Il suffit pour se faire de substituer partiellement la source de fluorures (typiquement NH₄F) de l'électrolyte utilisé dans la solution liquide 4 de l'étape d'anodisation par une quantité équivalente de fluorure d'aniline. Ce procédé conduit à une couche 5 dans laquelle l'essentiel voire tous les pores 6 sont libres, l'incorporation du polymère ne modifiant pas la structure de la couche 5 comme illustré sur la figure 5 représentant des photographies MEB de la couche 5 obtenue par incorporation de poly-aniline.

La poly-aniline peut également être incorporée dans la couche 5 déjà synthétisée (procédé dit « ex situ »). Dans ce cas, l'aniline en solution remplit les pores 6 de la couche 5 et peut polymériser par l'action d'un oxydant chimique. La structure obtenue pourrait alors avoir quelques pores 6 au moins partiellement bouchés par le polymère électriquement conducteur.

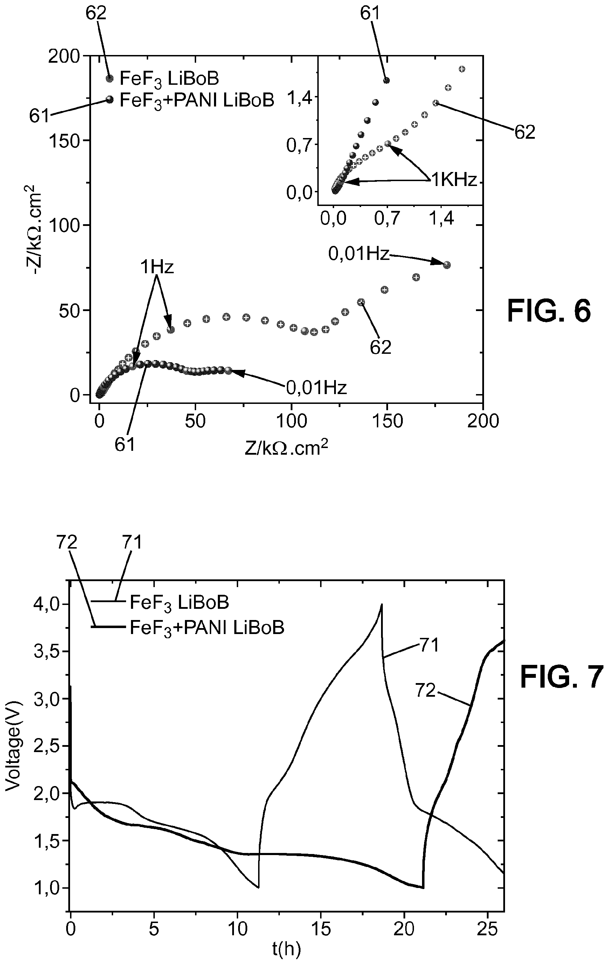

Le graphique de la figure 6 représente les résultats de mesures d'impédance électrochimique effectués sur deux électrodes différentes : une électrode dépourvue de poly-aniline (mesures correspondant aux points 62 sur la figure 6), et une électrode comprenant de la poly-aniline (mesures correspondant aux points 61 sur la figure 6). Ce graphique est un diagramme de Nyquist représentant l'impédance imaginaire en ordonnée et l'impédance réelle en abscisse. Le protocole permettant d'effectuer les mesures représentées sur le diagramme de la figure 6 est identique à celui décrit dans l'article « On the growth of nanostructured iron hydroxy-fluorides for Li-ion batteries » de Guitiân B. et al. JOURNAL OF POWER SOURCES, vol. 241, (2013-05-12) pages 567-571. L'impédance électrochimique de l'électrode comprenant de la poly-aniline est plus faible que celle sans poly-aniline, ce qui implique une capacité restituée plus grande.

La figure 7 complète les informations qui sont déduites de la figure 6 par un graphe représentant la variation du potentiel en fonction du temps et lors d'un cycle de charge et décharge d'une électrode positive comprenant de la poly-aniline (mesures correspondant à la courbe 72) comparée à celle d'une électrode dépourvue de poly-aniline (mesures correspondant à la courbe 71). Ces mesures comparatives confirment des performances bien supérieures en présence de poly-aniline, avec une capacité restituée supérieure au cas d'une électrode dépourvue de ce composé électriquement conducteur.

Outre l'ajout de poly-aniline, qui n'est donné ici que comme un exemple parmi d'autres de polymères électriquement conducteurs pouvant être utilisés en vue d'augmenter la conductivité électrique d'une électrode positive, des composés inorganiques peuvent également être utilisés en guise de composé électriquement conducteur.

L'oxyfluorure de fer et la magnétite peuvent par exemple être incorporés après la synthèse de la couche 5, lorsque cette dernière est déjà formée. La magnétite peut également être incorporée in situ comme la poly-aniline.

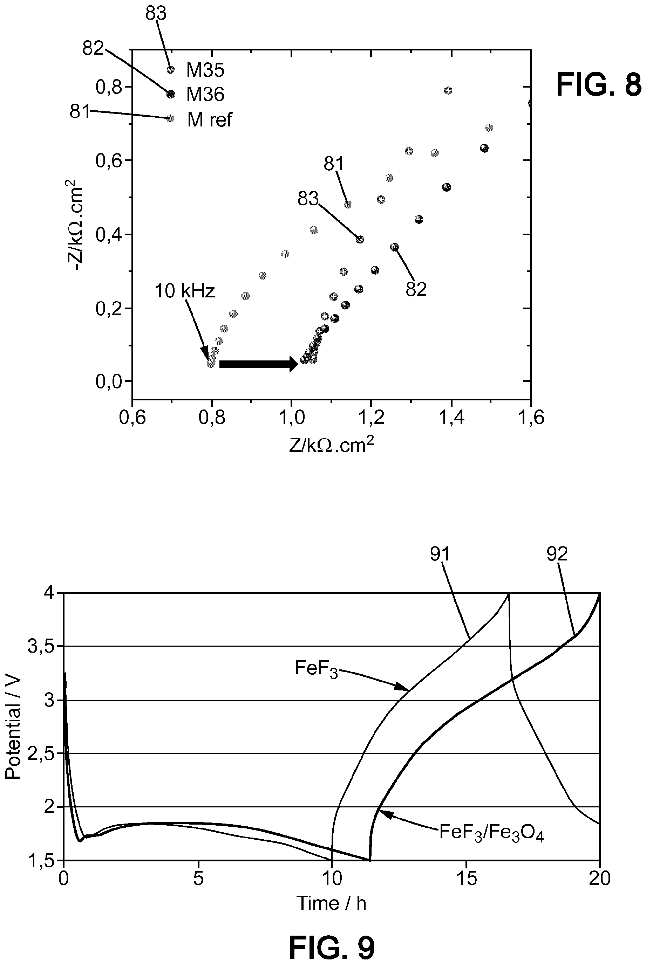

La magnétite peut par exemple est rajoutée sous forme de particules dont les dimensions sont plus petites que celles des pores 6 de la couche 5. L'ajout de particules de magnétite peut se faire par immersion de l'électrode comprenant la couche 5 dans une suspension colloïdale de magnétite, ou par co-précipitation à partir de solutions de chlorures de fer. Le séchage préalable de l'électrode pour débarrasser la couche 5 de la solution liquide utilisée lors de l'anodisation, avant incorporation de magnétite, peut influer sur les performances de l'électrode obtenue. La figure 8 représente sur un diagramme de Nyquist analogue à celui de la figure 6, les résultats de mesures d'impédance électrochimique effectués sur trois électrodes différentes : une électrode dépourvue de composé électriquement conducteur additionnel (mesures correspondant aux points 81 sur la figure 8), une électrode comprenant de la magnétite rajoutée sans étape de séchage intermédiaire après synthèse de la couche 5 (mesures correspondant aux points 82 sur la figure 8) et une électrode comprenant de la magnétite rajoutée avec une étape de séchage après synthèse de la couche 5 (mesures correspondant aux points 83 sur la figure 8).

La figure 8 illustre le fait que l'ajout de magnétite augmente la partie réelle de l'impédance haute-fréquence (à 10 kHz) de l'électrode. Des simulations numériques utilisant ces données (conformément à ce qui est décrit dans l'article « On the growth of nanostructured iron hydroxy-fluorides for Li-ion batteries » de Guitiân B. et al. JOURNAL OF POWER SOURCES, vol. 241, (2013-05-12) pages 567-571) renvoient des valeurs de résistivité de la couche de fluorure de fer de 1809,5 kohm cm pour les mesures des points 81, 772,5 kohm cm pour les mesures des points 82, et 1,2 kohm cm pour les mesures des points 83. Il en résulte donc qu'une meilleure conductivité électrique (et un gain en capacité restituée) est obtenue lorsque de la magnétite est incorporée dans la couche 5, que l'électrode ait subi une étape de séchage pour la débarrasser de la solution liquide ayant servi à l'anodisation du collecteur de courant 1 ou non. Le séchage de l'électrode permet d'obtenir de meilleures performances sur l'électrode positive fabriquée.

La figure 9 est un graphique illustrant la variation du potentiel d'une électrode positive en fonction du temps et lors d'un cycle de décharge et de charge. Il compare notamment l'évolution du potentiel en fonction du temps sur un cycle d'une électrode dépourvue de magnétite (courbe 91) avec celle d'une électrode comprenant de la magnétite (courbe 92). Ces mesures ont été effectuées à température ambiante et avec un courant de 0,01 mA dans un assemblage de type pile bouton avec une électrode négative en lithium métallique. Il résulte de ce graphique que la magnétite augmente la capacité restituée par l'électrode, cette capacité restituée accrue étant obtenue grâce à une meilleure conduction électrique.

Outre l'utilisation de magnétite, la substitution partielle de fluorures de fer par des fluorures de fer partiellement oxydés est une autre voie permettant d'améliorer la conductivité électronique de la couche 5. L'oxyfluorure de fer peut être formé par un traitement thermique sous atmosphère humide contrôlée de la couche 5. Ceci conduit à l'incorporation d'hétéroatomes qui augmentent le nombre de défauts de l'électrode ainsi que la conductivité électrique. La structure de l'électrode est donc modifiée, ce qui se constate par une diminution du diamètre des pores 6, lié au dopage de la couche 5 par de l'oxygène.

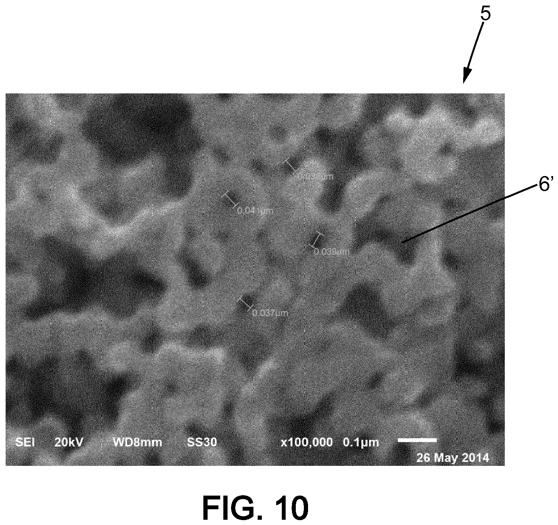

La figure 10 représente une photo MEB d'une électrode positive obtenue par formation d'oxyfluorures de fer dans la couche 5. Les pores 6 y ont un diamètre sensiblement plus petit que 50 nm.

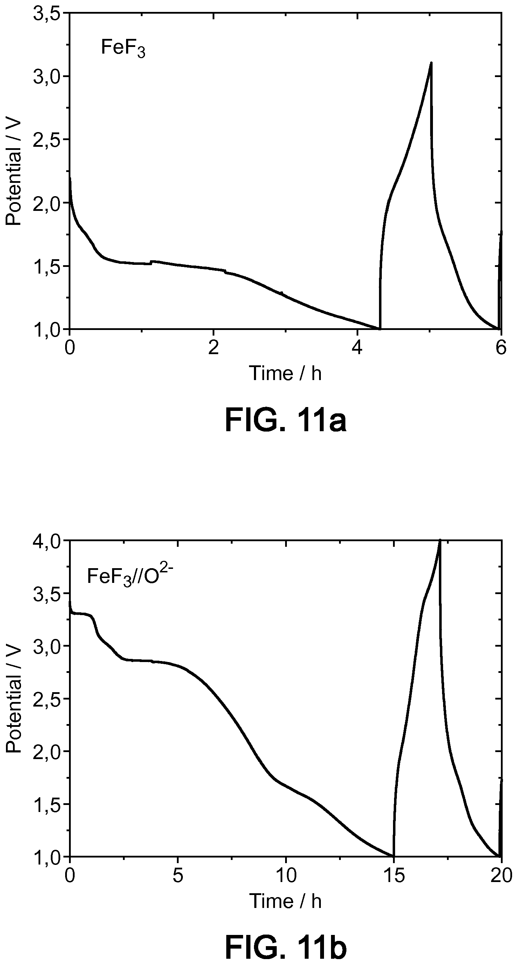

Les figures 11a et 11b représentent sur deux graphiques respectivement la variation du potentiel en fonction du temps et lors d'un cycle de charge et décharge d'une électrode positive dépourvue d'oxyfluorure de fer et celle d'une électrode comprenant de l'oxyfluorure de fer. Il en résulte que la capacité restituée par l'électrode comprenant de l'oxyfluorure de fer est plus élevée que celle restituée par l'électrode dépourvue d'oxyfluorure de fer.

Bien entendu, les différents composés électriquement conducteurs présentés ci-avant peuvent être remplacés par des composés aux propriétés similaires, et peuvent aussi être utilisés ensemble dans une même électrode.

Le collecteur de courant 1 servant de support pour la croissance de la couche 5 d'un fluorure de métal peut être un collecteur en métal ou comprenant un métal. Il peut s'agir par exemple d'un collecteur de courant 1 comprenant du fer, du cuivre, du nickel du cobalt du chrome, du manganèse, du zinc ou un alliage de l'un de ces métaux. Le métal constituant la couche 5 peut être un fluorure de fer, de cuivre, de nickel, de cobalt, de manganèse, de zinc ou de chrome, ce qui ne modifie pas de manière substantielle le procédé de fabrication décrit ci-avant. Par exemple, l'acier peut être utilisé comme alliage à base de fer dans le collecteur de courant. La croissance de la couche 5 s'effectue grâce au métal utilisé dans le collecteur de courant, ou l'un des métaux utilisés dans le collecteur de courant dans le cas d'un alliage, ce qui implique que le métal du fluorure de métal de la couche 5 et le métal du collecteur de courant 1 correspondent généralement à un même élément chimique. Il est également possible que l'halogénure de métal soit un halogénure mixte. La couche 5 peut par exemple comprendre des halogénures de Ni, Cr, Fe, notamment lorsque le collecteur de courant comprend un ou des alliages des mêmes métaux.

Le procédé et l'électrode positive pour dispositif électrochimique présentés ci-avant permettent d'obtenir une électrode en fluorure de métal dans une configuration telle que le fluorure de métal est autosupporté par le collecteur de courant en y étant solidaire. Le procédé de fabrication est simple et peu couteux, et peut être réalisé de différentes façons ce qui le rend modulable.

## Revendications

1. Procédé de fabrication d'une électrode positive destinée à être utilisée dans un dispositif électrochimique à ion de métal alcalin, comprenant :
- synthétiser une couche (5) d'un halogénure de métal par traitement électrochimique d'un collecteur de courant (1), la couche comprenant une structure poreuse ;
le procédé étant **caractérisé en ce qu'**il comprend en outre :
- incorporer, dans au moins une partie de la structure poreuse, un composé électriquement conducteur.

2. Procédé selon la revendication 1, dans lequel la structure poreuse de la couche (5) d'un halogénure de métal comprend des pores (6), le procédé comprenant en outre :
- incorporer le composé électriquement conducteur au moins partiellement dans des pores de la structure poreuse de la couche (5) d'un halogénure de métal.

3. Procédé selon l'une quelconque des revendications 1 ou 2, dans lequel la structure poreuse de la couche (5) d'un halogénure de métal comprend des parois, le procédé comprenant en outre :
- incorporer le composé électriquement conducteur au moins partiellement dans des parois de la structure poreuse de la couche (5) d'un halogénure de métal.

4. Procédé selon l'une quelconque des revendications 1 à 3, dans lequel le traitement électrochimique comprend une anodisation du collecteur de courant à partir d'une solution d'éthylèneglycol, du fluorure d'ammonium et de l'eau.

5. Procédé selon l'une quelconque des revendications 1 à 4, comprenant en outre :
- incorporer le composé électriquement conducteur lors du traitement électrochimique du collecteur de courant.

6. Procédé selon l'une quelconque des revendications 1 à 5, comprenant en outre :
- incorporer le composé électriquement conducteur après avoir synthétisé la couche d'halogénure de métal.

7. Electrode positive destinée à être utilisée dans un dispositif électrochimique à ion de métal alcalin, l'électrode comprenant :
- un collecteur de courant (1) comprenant un métal ;
- une couche (5) en halogénure de métal comprenant une structure poreuse, la couche étant solidaire du collecteur de courant, l'halogénure de métal de la couche comprenant le même métal que le collecteur de courant ;
l'électrode positive étant **caractérisée en ce qu'**elle comprend en outre :
- un composé électriquement conducteur inclus dans au moins une partie de la structure poreuse de la couche en halogénure de métal.

8. Electrode selon la revendication 7, dans laquelle le composé électriquement conducteur est en contact direct avec la structure poreuse de la couche en halogénure de métal.

9. Electrode selon l'une quelconque des revendications 7 ou 8, dans laquelle le composé électriquement conducteur comprend de la magnétite et/ou de l'oxyfluorure de fer et/ou de la poly-aniline.

10. Electrode selon l'une quelconque des revendications 7 à 9, dans laquelle la structure poreuse comprend des pores (6) de diamètre compris entre 5 nm et 1 µm.

11. Electrode selon l'une quelconque des revendications 7 à 10, dans laquelle le composé électriquement conducteur se présente sous forme de particules dans la structure poreuse.

12. Electrode selon l'une quelconque des revendications 7 à 11, dans laquelle le collecteur de courant comprend un alliage à base de métal.

13. Electrode selon l'une quelconque des revendications 7 à 12, dans laquelle le métal du collecteur de courant est choisi parmi le fer, le cuivre, le nickel, le cobalt, le manganèse, le zinc ou le chrome.

14. Système électrochimique à ion de métal alcalin comprenant une électrode selon l'une des revendications 7 à 13.

15. Système électrochimique selon la revendication 14, agencé sous forme de batterie.

## Patentansprüche

1. Verfahren zur Herstellung einer positiven Elektrode zur Verwendung in einer elektrochemischen Alkalimetallionen-Vorrichtung, die Folgendes aufweist:
- Synthetisieren einer Metallhalogenidschicht (5) durch elektrochemische Behandlung eines Stromkollektors (1), wobei die Schicht eine poröse Struktur aufweist;
wobei das Verfahren **dadurch gekennzeichnet ist, dass** es darüber hinaus Folgendes aufweist:
- Einlagern einer elektrisch leitenden Verbindung in mindestens einen Teil der porösen Struktur.

2. Verfahren nach Anspruch 1, wobei die poröse Struktur der Metallhalogenidschicht (5) Poren (6) aufweist, wobei das Verfahren darüber hinaus Folgendes aufweist:
- mindestens teilweises Einlagern der elektrisch leitenden Verbindung in Poren der porösen Struktur der Metallhalogenidschicht (5).

3. Verfahren nach einem der Ansprüche 1 oder 2, wobei die poröse Struktur der Metallhalogenidschicht (5) Wände aufweist, wobei das Verfahren darüber hinaus Folgendes aufweist:
- mindestens teilweises Einlagern der elektrisch leitenden Verbindung in Wände der porösen Struktur der Metallhalogenidschicht (5).

4. Verfahren nach einem der Ansprüche 1 bis 3, wobei die elektrochemische Behandlung ein Anodisieren des Stromkollektors ausgehend von einer Lösung aus Ethylenglykol, Ammoniumfluorid und Wasser aufweist.

5. Verfahren nach einem der Ansprüche 1 bis 4, das darüber hinaus Folgendes aufweist:
- Einlagern der elektrisch leitenden Verbindung während der elektrochemischen Behandlung des Stromkollektors.

6. Verfahren nach einem der Ansprüche 1 bis 5, das darüber hinaus Folgendes aufweist:
- Einlagern der elektrisch leitenden Verbindung nach dem Synthetisieren der Metallhalogenidschicht.

7. Positive Elektrode zur Verwendung in einer elektrochemischen Alkalimetallionen-Vorrichtung, wobei die Elektrode Folgendes aufweist:
- einen Stromkollektor (1), der ein Metall aufweist;
- eine Metallhalogenidschicht (5), die eine poröse Struktur aufweist, wobei die Schicht fest mit dem Stromkollektor verbunden ist, wobei das Metallhalogenid der Schicht das gleiche Metall wie der Stromkollektor aufweist;
wobei die positive Elektrode **dadurch gekennzeichnet ist, dass** sie darüber hinaus Folgendes aufweist:
- eine elektrisch leitende Verbindung eingeschlossen in mindestens einem Teil der porösen Struktur der Metallhalogenidschicht.

8. Elektrode nach Anspruch 7, wobei die elektrisch leitende Verbindung in direktem Kontakt mit der porösen Struktur der Metallhalogenidschicht steht.

9. Elektrode nach einem der Ansprüche 7 oder 8, wobei die elektrisch leitende Verbindung Magnetit und/oder Eisenoxyfluorid und/oder Polyanilin aufweist.

10. Elektrode nach einem der Ansprüche 7 bis 9, wobei die poröse Struktur Poren (6) mit einem Durchmesser zwischen 5 nm und 1 µm aufweist.

11. Elektrode nach einem der Ansprüche 7 bis 10, wobei die elektrisch leitende Verbindung in Form von Partikeln in der porösen Struktur vorliegt.

12. Elektrode nach einem der Ansprüche 7 bis 11, wobei der Stromkollektor eine Legierung auf Metallbasis aufweist.

13. Elektrode nach einem der Ansprüche 7 bis 12, wobei das Metall des Stromkollektors ausgewählt ist aus Eisen, Kupfer, Nickel, Kobalt, Mangan, Zink oder Chrom.

14. Elektrochemisches Alkalimetallionen-System, das eine Elektrode nach einem der Ansprüche 7 bis 13 aufweist.

15. Elektrochemisches System nach Anspruch 14, das in Form einer Batterie ausgebildet ist.

## Claims

1. A method for manufacturing a positive electrode intended to be used in an alkali metal-ion electrochemical device, comprising:
- synthesising a layer (5) of a metal halide by electrochemical treatment of a current collector (1), the layer comprising a porous structure;
the method being **characterised in that** it further comprises:
- incorporating, in at least one portion of the porous structure, an electrically conductive compound.

2. The method according to claim 1, wherein the porous structure of the metal halide layer (5) comprises pores (6), the method further comprising:
- incorporating the electrically conductive compound at least partially into pores of the porous structure of the metal halide layer (5).

3. The method according to any one of claims 1 or 2, wherein the porous structure of the metal halide layer (5) comprises walls, the method further comprising:
- incorporating the electrically conductive compound at least partially into the walls of the porous structure of the metal halide layer (5).

4. The method according to any one of claims 1 to 3, wherein the electrochemical treatment comprises anodising the current collector from an ethylene glycol solution, ammonium fluoride and water.

5. The method according to any one of claims 1 to 4, further comprising:
- incorporating the electrically conductive compound during the electrochemical treatment of the current collector.

6. The method according to any one of claims 1 to 5, further comprising:
- incorporating the electrically conductive compound after synthesising the metal halide layer.

7. A positive electrode intended to be used in an alkali metal-ion electrochemical device, the electrode comprising:
- a current collector (1) comprising a metal;
- a layer (5) made of metal halide comprising a porous structure, the layer being integral with the current collector, the metal halide of the layer comprising the same metal as the current collector;
the positive electrode being **characterised in that** it further comprises:
- an electrically conductive compound included in at least one portion of the porous structure of the layer made of metal halide.

8. The electrode according to claim 7, wherein the electrically conductive compound is in direct contact with the porous structure of the layer made of metal halide.

9. The electrode according to any one of claims 7 or 8, wherein the electrically conductive compound comprises magnetite and/or iron oxyfluoride and/or polyaniline.

10. The electrode according to any one of claims 7 to 9, wherein the porous structure comprises pores (6) with a diameter comprised between 5 nm and 1 µm.

11. The electrode according to any one of claims 7 to 10, wherein the electrically conductive compound is in the form of particles in the porous structure.

12. The electrode according to any one of claims 7 to 11, wherein the current collector comprises a metal-based alloy.

13. The electrode according to any one of claims 7 to 12, wherein the metal of the current collector is selected from iron, copper, nickel, cobalt, manganese, zinc or chromium.

14. An alkali metal-ion electrochemical system comprising an electrode according to one of claims 7 to 13.

15. The electrochemical system according to claim 14, arranged in the form of a battery.
